# EUROPÄISCHE PATENTANMELDUNG

(11) **EP 4 834 551 A1**
(43) Veröffentlichungstag der Anmeldung: **04.11.2026**
(21) Anmeldenummer: 26176141.5
(22) Anmeldetag: 02.05.2026
(51) Int. Cl.: B26D 7/32, B65G 15/10, B65G 15/12, B65G 23/08

(54) **ANTRIEBSEINHEIT UND VERWENDUNG**

(30) Priorität: 03.05.2025 DE 102025116967
(71) Anmelder: Schindler Holding GmbH & Co KG, 73655 Plüderhausen (DE)
(72) Erfinder: Kraus, Bernhard, 73434 Aalen - Dewangen (DE); Haak, Jürgen, 72820 Sonnenbühl (DE); Schindler, Jens, 73655 Plüderhausen (DE)
(74) Vertreter: Hutzelmann Patentanwaltsgesellschaft mbH

(57) **Zusammenfassung**

Antriebseinheit (2) in Form einer angetriebenen Trommel, wobei innerhalb der Antriebseinheit ein Motor vorgesehen ist und die Außenseite als glatte Trommel, Riemenscheibe, Zahnriemenscheibe, Zahnrad und/oder Kettenrad ausgebildet ist, wobei der Motor als Trommelmotor ausgebildet sein kann. Die Antriebseinheit (2) ist zum Antreiben von Fördereinrichtungen (1, 5) vorgesehen.

## Beschreibung

Die Erfindung bezieht sich auf eine Antriebseinheit in Form einer angetriebenen Trommel.

Es sind verschieden derartige Antriebseinheiten bekannt, die jedoch sehr groß bauen, reinigungsintensiv sind und teilweise auch fehleranfällig sind.

Aufgabe der Erfindung ist es, eine kompakte Antriebseinheit vorzuschlagen, die vor allem zum Antrieb von Transportbändern vor allem im Bereich mit erhöhten Anforderungen an Hygiene eingesetzt werden können und Verwendungen dieser Antriebseinheit vorzuschlagen. Andere Anwendungen sind denkbar.

Diese Aufgabe wird erfindungsgemäß dadurch gelöst, dass innerhalb der Antriebseinheit ein Motor vorgesehen ist und die Außenseite als glatte Trommel, Riemenscheibe, Zahnriemenscheibe, Zahnrad und/oder Kettenrad ausgebildet ist, wobei der Motor als Trommelmotor ausgebildet sein kann.

Äußerst vorteilhaft ist es erfindungsgemäß, wenn die Antriebseinheit zum Antreiben von Fördereinrichtungen vorgesehen ist,
Dabei hat es sich als sehr vorteilhaft erwiesen, wenn die Antriebseinheit zum Antreiben von Förderbändern und/oder Förderriemen vorgesehen ist.

In beiden Fällen kann auf große und schwere Antriebseinheiten verzichtet werden. Der Antrieb erfolgt Inline mit den Fördereinrichtungen durch leichte und platzsparende Antriebseinheiten.

Es hat sich erfindungsgemäß auch als äußerst vorteilhaft erwiesen, wenn die Antriebseinheit zum getrennten Antreiben von mehreren, nebeneinander angeordneten Fördereinrichtungen vorgesehen ist.

Durch die kompakten Antriebseinheiten kann auf Umlenkungen und große Antriebsmotore verzichtet werden und meherer Fördereinrichtungen nebeneinander individuell antreibbar angeordnet werden und so eine mehrbahnige Fördereinheit zu schaffen, ohne einen großen Bauraum zu benötigen.

Sehr vorteilhaft ist es auch, wenn mehrere schwenkbare, getrennt durch Antriebseinheit angetriebene Unterläufer eines Slicers vorgesehen sind.

Diese Unterläufer können getrennt nach unten geschwenkt werden um diese neu zu beladen. Eine Unterbrechung des Verarbeitungsvorganges wird so auf engem Raum vermieden. Dabei können die Unterläufer in Transportrichtung zweigeteilt ausgebildet sein, so dass bei laufendem Schneideprozess eine Beladung stattfinden kann.

Weiterhin hat es sich gemäß einer Fortbildung der Erfindung als sehr vorteilhaft erwiesen, wenn mehrere getrennt durch Antriebseinheiten angetriebene Oberläufer eines Slicers vorgesehen sind.

Auch mit diesen mehrbahnig angeordneten Oberläufern kann sehr gut auf unterschiedlich lange Warenstangen reagiert werden, so dass Verarbeitungslücken vermieden werden.

Dabei hat es sich als sehr vorteilhaft erwiesen, wenn jeder Oberläufer mit Mitteln zur Fixierung von zu verarbeitenden Waren, insbesondere Gripper, Dornen und/oder Krallen ausgerüstet ist.

Dadurch wird sichergestellt, dass die Waren sicher während des Schneidvorganges gehalten werden.

Erfindungsgemäß äußerst vorteilhaft ist es auch, wenn eine Lineareinheit eines Slicers durch mehrbahnige Transport- oder Zahnriemenantriebe ersetzt ist.

Damit wird der benötigte Bauraum der gesamten Anlage deutlich reduziert, da auf die vergleichsweise groß bauenden Lineareinheiten der Slicer verzichtet werden kann.

Eine weitere sehr vorteilhafte Fortbildung der Erfindung liegt vor, wenn zwischen mehreren Transportbahnen durch die Antriebseinheit angetriebene Transportwalzen und/oder angetriebene Trennstege vorgesehen sind.

Durch diese Transportwalzen und/oder angetriebene Trennstege werden auch Seitenläufer gebildet, die eine weitere Fixierung und Führung der zu verarbeitenden Waren ermöglichen.

Eine sehr vorteilhafte Weiterbildung der Erfindung liegt auch vor, wenn durch individuell angetriebene Transportbänder ein Puffersystem für zu transportierende Waren geschaffen wird, wobei die einzelnen Transportbänder kurz ausgebildet sein können.

Hierdurch lassen sich Beladelücken vermeiden. Beladungszeiten werden durch das Puffersystem überbrückt. Genauso lassen sich so auch Portionen vervollständigen.

Sehr vorteilhaft ist es erfindungsgemäß auch, wenn mittels einer oder mehrerer Antriebseinheiten eine Querverschiebung für ein Transportband, insbesondere ein Portionierband realisiert wird.

Durch die Querverschiebung können fehlende Portionen ergänzt werden, die durch einzelne kürzere Produktstangen entstehen.

Eine weitere sehr vorteilhafte Ausgestaltung der Erfindung liegt vor, wenn mittels der Antriebseinheit eine Wendeeinheit für auf einem Transportband transportierte Waren aufgebaut wird.

Damit lassen sich geschnittene Waren sehr gut wenden und für das Verpacken vorbereiten.

Eine ebenfalls sehr vorteilhafte Weiterbildung liegt vor, wenn jedes durch eine Antriebseinheit angetriebene Transportband mit einer Laibwaage ausgerüstet ist.

Durch die individuellen Laibwaagen lässt sich jede Produktstange individuell verwiegen. Dies wird durch die kleinere Bauform des Antriebs erst ermöglicht.

Sehr vorteilhaft ist es gemäß einer Fortbildung der Erfindung, wenn eine ein- oder mehrbahnig angetriebene Rolle einer Schneidleiste vorgesehen ist.

Durch die zugeordneten angetriebenen Rollen wird der Schneidvorgang nochmals präziser, aber dennoch bahnindividuell sichergestellt.

Äußerst vorteilhaft ist es gemäß einer Variante der Erfindung auch, wenn eine oder mehrere Absenkeinheiten für jeweils eine Transportbahn vorgesehen ist.

Durch derartige Absenkeinheiten lässt sich eine Portionenvervollständigung realisieren. Ebenso denkbar ist durch die Absenkeinheiten das Fallbild der einzelnen Scheiben zu beeinflussen.

Weiterhin sehr vorteilhaft ist es, wenn eine oder mehrere Ausschleuseeinheiten, die insbesondere als Schwingen ausgebildet sind, jeweils von einer Antriebseinheit angebtrieben vorgesehen sind.

Durch diese getrennten Ausschleuseeinheiten lassen sich Portionen individuell auschleusen.

Eine äußerst vorteilhafte Weiterbildung der Erfindung liegt auch vor, wenn ein separat durch eigene Antriebseinheiten angetriebene Speichertransportbänder vorgesehen sind.

Hierdurch lässt sich ein Speichersystem aufbauen.

Dabei ist es sehr vorteilhaft, wenn jedes Speichertransportband zur Lagerung von einer oder mehrerer Produktscheiben vorgsehen ist, die dann zur Vervollständigung von Portionen auf ein Portionierband aufgebracht werden.

Damit stehen zur Portionsvervollständigung immer die richtigen Scheibenanzahlen zur Verfügung. Die Speichertransportbänder werden beispielsweise in Produktionspausen befüllt.

Weiterhin sehr vorteilhaft ist es, wenn individuelle Transportbänder für Interleaver, Underleaver, L-Boards und/oder Trays vorgesehen sind.

Damit lassen auf engstem Raum auch Interleaver, Underleaver und/oder L-Boards zuführen. Genauso lassen sich Trays sehr gut transportieren.

Äußerst vorteilhaft ist es, wenn Transportbänder direkt angetrieben sind.

Die Transportbänder lassen sich so sehr genau antreiben. Zudem wird Platz gespart.

Sehr vorteilhaft ist es weiterhin, wenn durch die Kombination mehrerer Antriebseinheiten mehrere Funktionen kombinierbar sind.

Diese mehrere Funktionen lassen sich auf engstem Raum kombinieren.

Eine ebenfalls sehr vorteilhafte Ausgestaltung liegt vor, wenn mehrere individuell angetriebene Transportstrecken hinter- und/oder nebeneinander vorgesehen sind.

Damit lässt sich das Transportsystem äußerst genau steuern.

Im folgenden wird die Erfindung anhand mehrerer Ausführungsbeispiele veranschaulicht.

Dabei zeigen:
- Fig. 1: einen mehrbahnigen Unterläufer mit einem Oberläufer mit einem Gripper,
- Fig. 2: einen geteilten mehrbahnigen Unterläufer mit einem Oberläufer mit mehreren Grippern,
- Fig. 3: einen geteilten mehrbahnigen Unterläufer mit einem Oberläufer mit umlaufenden Dornen,
- Fig. 4: eine Mittelrollenanordnung
- Fig. 5: eine schematische Darstellung einer Verschiebeeinheit zur Portionsvervollständigung,
- Fig. 6: dieselbe Verschiebeeinheit in einer verschobenen Anordnung
- Fig. 7: ein Speichersystem zur Einzelscheibenvervollständigung.

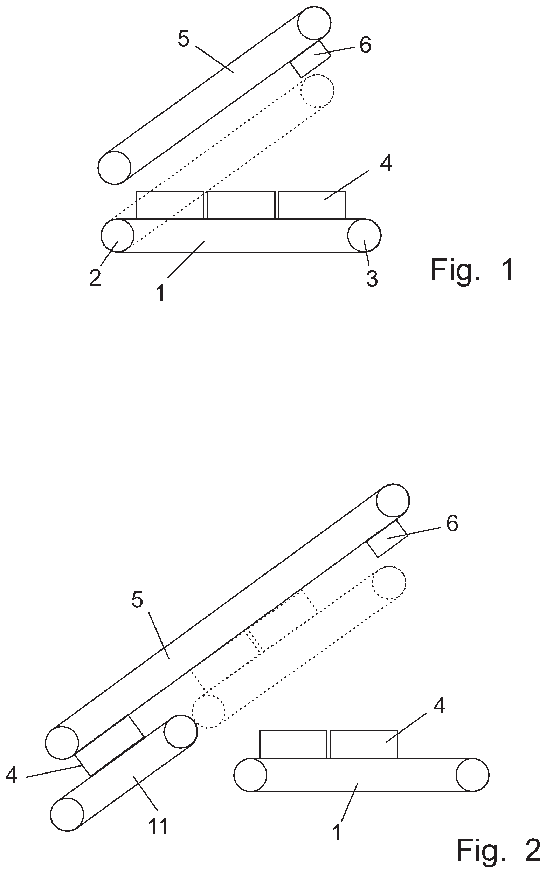

Mit 1 ist in Fig. 1 ein Unterläufer mit einer Antriebseinheit 2 bezeichnet. Der Unterläufer ist um eine Umlenkrolle 3 schwenkbar angeordnet. Auf dem Unterläufer 1 sind Produktstangen 4 aufgelegt. Ist der Unterläufer 1 vollständig mit Produktstangen 4 belegt, wird dieser nach oben geschwenkt, bis die Produktstangen 4 gegen einen Oberläufer 5 gedrückt werden. Am Oberläufer 5 ist ein Gripper 6 vorgesehen, welcher die Produktstangen 4 zu greifen vermag und beim dann folgenden Schneidevorgang der Produktstangen 4 in Scheiben diese fixiert und führt.

Durch die Verwendung der Antriebseinheit 2, die klein und leicht baut, ist eine solche Ausgestaltung erst möglich. Nicht in der Zeichnung dargestellt ist, dass Ober- und Unterläufer mehrbahnig nebeneinander angeordnet sind, wobei diese durch individuelle Antriebseinheiten 2 getrennt steuerbar sind.

Sind die Produktstangen 4 unterschiedlich lang, so können einzelne Unterläufer 1 bei kurzen Produktstangen 4 früher wieder nach unten geschwenkt und erneut beladen werden wie Unterläufer 1 auf den lange Produktstangen 4 liegen.

Es kommt so zu keinen wesentlichen Unterbrechungen im Schneideprozess.

In Fig. 2 ist eine Abwandlung hiervon dargestellt. Hier ist zusätzlich in Transportrichtung der Produktstangen 4 nach dem Unterläufer 1 ein weiterer Unterläufer 11 vorgesehen, welcher zwischen dem Unterläufer 1 und einem nicht dargestellten Schneidmesser angeordnet ist.

Der Unterläufer 1 wird wieder, wie vorstehend beschrieben beladen. Jedoch werden die Produktstangen 4 für den Schneidvorgang auf den Unterläufer 11 gefördert.

Das bedeutet aber, dass, sobald die letzte Produktstange 4 auf den Unterläufer 11 gefördert ist, der Unterläufer 1 wieder nach unten geschwenkt und wieder beladen werden kann. So kommt es dann zu kleiner Produktionsunterbrechung.

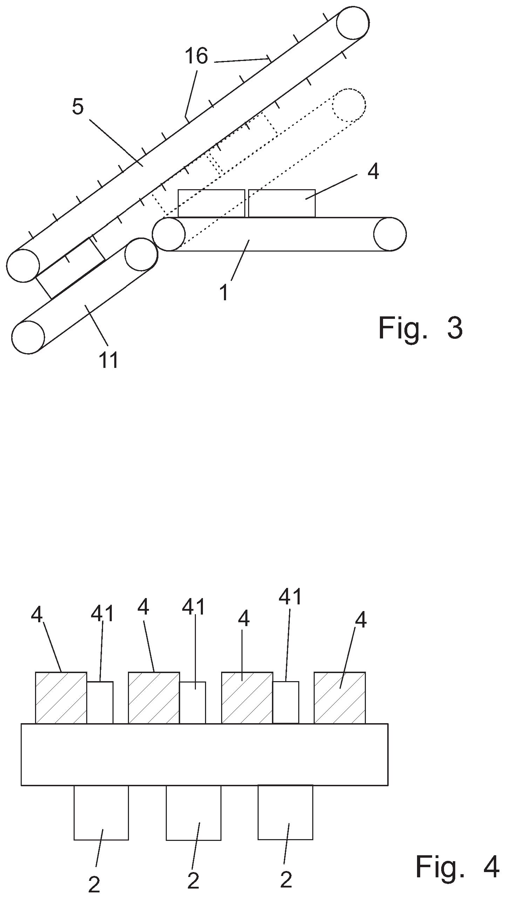

In Fig. 3 ist nochmals eine Abwandlung dargestellt. Anstatt der Gripper 6 sind am Oberläufer 5 umlaufend Dornen 16 angeordnet, die sich in die Produktstangen 4 eingraben und diese fixieren.

In Fig. 4 ist ein Anordnung seitlicher Transportwalzen bzw. angetriebener Trennstege gezeigt. Die Transportwalzen sind mit 41 bezeichnet. Mehrere Transportwalzen 41 bilden zusammen einen Seitenläufer und sorgen so für eine Ausrichtung und einen gesicherten Weitertransport von Produktstangen 4 zum Schneidmesser hin.

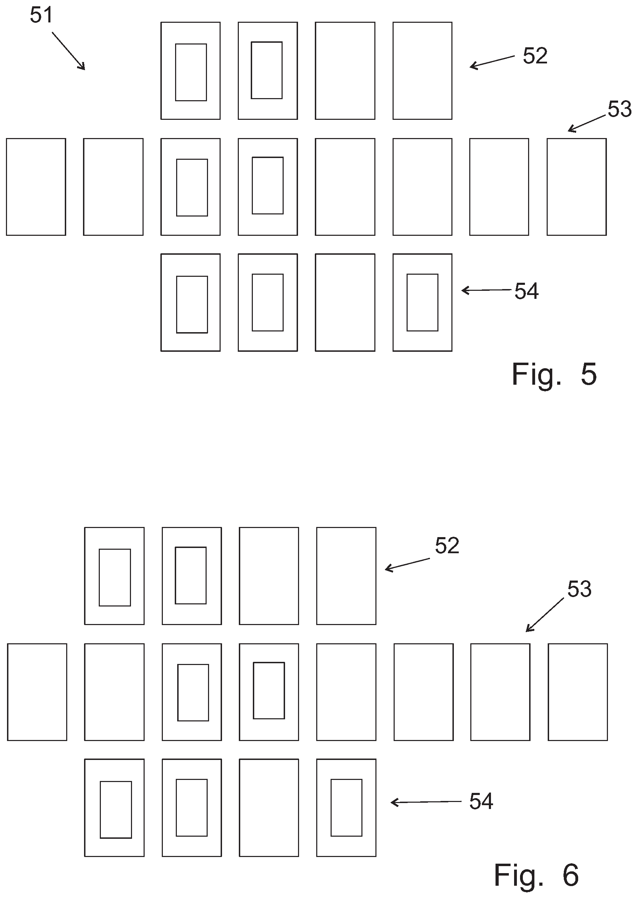

Eine Verschiebeeinheit 51 ist in Fig. 5 schematisch gezeigt. Dort sind bei einer beispielsweise vierbahnigen mehrere Transportbänder 52, 53 und 54 hintereinander angeordnet. Die mittlere Reihe Transportbänder 53 ist dabei querverschiebbar ausgebildet.

Endet nun auf einer Bahn eine Produktstange 4 früher wie auf anderen Bahnen, wird die dadurch fehlende Position auf dieser Bahn durch eine Portion einer anderen Bahn vervollständigt, indem das entsprechende Transportband in der mittleren Reihe 53 quer verschoben wird, bis dieses an der richtigen Position zur Vervollständigung liegt.

Diese Verschiebung ist schematisch in Fig. 6 dargestellt.

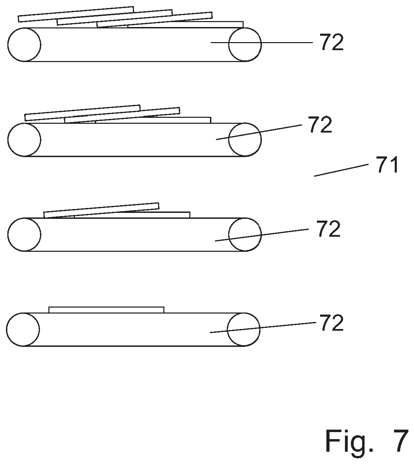

In Fig. 7 ist ein System zur Portionenvervollständigung auf Einzel-Scheiben-Basis dargestellt mit einem aus mehreren individuell angetriebenen Förderbändern 72, die zusammen ein Speichersystem 71 bilden.

Auf den einzelnen Förderbändern 72 liegen unterschiedliche viele Scheibenanzahlen. So ist es denkbar, dass mehrere Förderbänder mit einer Scheiben belegt sind, und mehrere Förderbänder mit zwei und drei Scheiben.

Fehlt nun in einer Portion genau eine Scheibe, so wird diese vom entsprechenden Förderband 72 vervollständigt. Genauso bei zwei und drei Scheiben. Fehlen hingegen vier Scheiben, so werden zwei mal zwei Scheiben vervollständigt.

Da hier Lebensmittel verarbeitet werden, ist es wichtig, die Verweildauer der Scheiben im Speichersystem 71 zu überwachen. Je nach Produkt kann eine entsprechende Zeitdauer für die maximale Verweildauer vorgegeben werden. Wird diese überschritten wird die jeweilieg Scheibe ausgeschleust.

Nicht dargestellt ist die Realisierung der Zuführung von Underleavern, Interleavern, L-Boards oder dergleichen.

Aufgrund der kompakten, sich auf das Transportband beschränkenden Abmessungen sind diese sehr platzsparend anordenbar. Der Antrieb verschwindet vällig im Transportband und ist dabei sehr leicht.

Durch die eingesparten Massen und auch Zwischenriemen, Umlenkungen und dergleichen wird der benötigte Energieaufwand verringert. Das bedeutet wiederum, dass die Antriebsleistung der einzelnen Antriebseinheiten deutlich niedriger sein kann wie bei konventionellen Antrieben.

Verschleiß wird ebenso minimiert, da weniger bewegliche Teile vorgesehen sind.

Die Antriebseinheit kann dabei vollständig gekapselt ausgeführt sein, wodurch sie leicht reinigbar ist.

Auch Wendeeinheiten und andere Kombinationen von Funktionen sind denkbar.

Äußerst vorteilhaft ist es erfindungsgemäß, wenn der Motor als Getriebemotor ausgebildet ist.

Hierdurch können auch größere Kräfte und geringe Geschwindigkeiten realisiert werden.

Gemäß einer Fortbildung der Erfindung ist es auch sehr vorteilhaft, wenn die Motorachse einseitig gelagert ausgebildet ist.

Hierdurch kann die Antriebseinheit sehr kompakt gebaut werden und lässt sich dennoch gut befestigen.

Als besonders vorteilhaft hat es sich auch erwiesen, wenn das Verhältnis von Trommelbreite zum Trommeldurchmesser kleiner 2 ist und vorzugsweise zwischen 1 und kleiner 0,5 beträgt.

Hierdurch lassen sich gerade Transportbänder besonders gut antreiben. Im Idealfall baut die Antriebseinheit nur so breit wie die Transportbänder.

Gemäß einer weiteren Ausgestaltung der Erfindung ist es auch sehr vorteilhaft, wenn die Motorachse hohl ausgebildet ist.

Eine hohle Motorachse kann sehr gut genutzt werden und verleiht der Antriebseinheit hohe Stabilität.

Gemäß einer weiteren Weiterbildung der Erfindung ist es auch sehr vorteilhaft, wenn eine Winkelmesseinrichtung vorgesehen ist, welche vorzugsweise in der Motorachse angeordnet ist.

Hierdurch kann jederzeit die genaue Position der Trommel der Antriebseinheit festgestellt werden. Es können Szenarien entwickelt werden, die eine definierte Umdrehungsanzahl nutzt.

Eine weitere sehr vorteilhafte Ausgestaltung der Erfindung liegt vor, wenn ein Elektromotor als Antrieb in der Antriebseinheit vorgesehen ist, der vorzugsweise in der hohlen Achse angeordnet ist.

Hierdurch lässt sich die Antriebseinheit sehr gut antreiben.

Weiterhin hat es sich als besonders vorteilhaft erwiesen, wenn ein ein- oder mehrstufiges Getriebe, insbesondere ein Stirnradgetriebe, ein Planetengetriebe, ein Zykloidgetriebe und/oder ein Exzentergetriebe, vorzugsweise an der Stirnseite der Achse angeordnet ist.

Das Stirnradgetriebe arbeitet als Unter- bzw. Übersetzung und bildet so das Getriebe der Antriebseinheit.

Dabei hat es sich als sehr vorteilhaft erwiesen, wenn das Getriebe mehrfach parallel arbeitende Zahnräder aufweist.

Diese mehrfach parallel arbeitenden Zahnräder ermöglichen eine sehr hohe Kraftübertragung bei geringem Verschleiß.

Äußerst vorteilhaft ist es erfindungsgemäß auch, wenn eine Achsaufhängung ein- oder mehrseitig radial über den Trommeldurchmesser hinausragt.

Damit lässt sich eine sehr gute Befestigung der Achsaufhängung realisieren. Zudem kann Wärme über die Achsaufhängung abgeführt werden.

Äußerst vorteilhaft ist es erfindungsgemäß auch, wenn eine Flanschplatte zur Befestigung der Achsaufhängung vorgesehen ist.

Die Flanschplatte kann beispielsweise an einem Träger angeschraubt werden. Auch winkelförmige Flanschplatten bzw. Achsaufhängungen sind denkbar.

Gemäß einer weiteren Fortbildung der Erfindung ist es auch sehr vorteilhaft, wenn Zu- und Ableitungen des Motors über die Achse seitlich hinausgeführt ausgebildet sind.

Dadurch kann der Motor sehr gut angeschlossen werden. Denkbar sind neben elektrischen Leitungen auch Schmiermittelversorgungsleitungen.

Eine weitere sehr vorteilhafte Ausgestaltung der Erfindung liegt vor, wenn Wärmeleitungseinrichtungen, insbesondere Heat-Pipes zur Ableitung erzeugter Wärme vorgesehen sind.

Hierdurch lässt sich beim Betrieb der Antriebseinheit entstehende Abwärme sehr gut ableiten. Die Wärmeleitungseinrichtungen können dabei auch über die Achse herausgeführt sein.

Äußerts vorteilhaft ist es gemäß einer Weiterbildung der Erfindung auch, wenn eine Wärmeisolierung zwischen Hohlachse und Trommel vorgesehen ist.

Hiermit wird die Wärmeübertragung zwischen Hohlachse, die durch den Betrieb des Antriebsmotors in der Hohlachse erwärmt wird, und der abtreibenden Trommel reduziert. Es können dabei Temperaturen an bzw. in der Hohlachse im Bereich von 100 °C auftreten.

Eine weitere sehr vorteilhafte Ausgestaltung der Erfindung liegt vor, wenn die von der Motorachse abgewandte Seite der Trommel mit einem Verschlußdeckel verschlossen ist.

Durch den Verschlußdeckel wird das innere der Trommel, Getriebe und Elektromotor geschützt. Zudem wird ein Hineingreifen oder Hineingelangen von Fremdkörpern verhindert.

Sehr vorteilhaft ist es gemäß einer Weiterbildung der Erfindung auch, wenn auf der von der Motorachse abgewandten Seite der Trommel ein Wellenstummel angeordnet ist.

Dabei hat es sich als äußerst vorteilhaft erwiesen, wenn auf dem Wellenstummel Abtriebseinrichtungen und/oder Stützlager vorgesehen sind.

Der Wellenstummel kann weitere Einrichtungen antreiben. Hierzu können Kupplungen, Riemenscheiben, Zahnräder oder andere Kopplungen vorgesehen werden. Mit einem Stützlager wird die Belastung auf die Hohlachse reduziert. Der Wellenstummel kann mit einem Verschlußdeckel für die Trommel kombiniert sein. Es ist denkbar, daß der Wellenstummel geschraubt, verrastet oder anderweitig mit der Trommel verbunden ist.

Weiterhin hat es sich als sehr vorteilhaft erwiesen, wenn eine Entlüftung des Trommelkörpers vorgesehen ist, die vorzugsweise durch die Achsaufhängung realisiert ist.

Durch die Entlüftung werden Druckschwankungen im Trommelkörper vermieden, die sonst durch Temperaturschwankungen entstehen würden. Die Entlüftung sorgt für einen Druckausgleich. Ist die Entlüftung durch die Achsaufhängung geführt, so wird die Trommel außerhalb des Arbeitsbereiches entlüftet und ist so geschützt. Fremdkörper und Flüssigkeiten vermögen so nicht einzudringen, die beim Reinigen der Antriebseinheit einfallen können.

Gemäß einer weiteren Fortbildung der Erfindung ist es auch besonders vorteilhaft, wenn eine Abdichtung zwischen Trommel und Achsaufhängung vorgesehen ist.

Mittels einer solchen Abdichtung wird das Eindringen von Fremdkörpern und Flüssigkeiten in die Antriebseinheit wirksam verhindert. Gerade beim Reinigen von Lebensmittel verarbeitenden Anlagen werden oftmals Reinigungsmittel unter hohem Druck eingesetzt. Deren Eindringen in die Antriebseinheit wird so verhindert.

Gemäß einer weiteren Fortbildung der Erfindung hat es sich auch als besonders vorteilhaft erwiesen, wenn das Getriebe selbsthemmend ausgebildet und/oder eine Motorbremse vorgesehen ist.

Hierdurch wird die Antriebseinheit gegen Rückdrehen gesichert und auch blockiert.

Eine erfindungsgemäß sehr vorteilhafte Zusammenstellung mehrerer Antriebseinheiten liegt vor, wenn einzelne Antriebseinheiten mittels definierter Schnittstelle hinsichtlich mechanischer Befestigung, Energieversorgung, Schmiermittelversorgung und Wärmeableitung auf einer Konsole befestigbar sind und so eine Zusammenstellung mehrerer Antriebseinheiten bilden.

Hiermit lassen sich auch mehrere Antriebseinheiten zu einem Gesamtsystem verbinden.

Dabei hat es sich als besonders vorteilhaft erwiesen, wenn die Konsole mit Steuerungselektronik, einer Schmiermittelversorgung und/oder einem Kühlsystem für die einzelnen Antriebseinheiten ausgerüstet ist.

Damit wird der Aufbau modularisiert und lässt sich besonders leicht reinigen, warten und instandhalten.

Äußerst vorteilhaft ist es gemäß einer Fortbildung der Erfindung auch, wenn das Kühlsystem mit Wärmetauschern zur Ankopplung an die einzelnen Antriebseinheiten ausgebildet ist.

Hierdurch lassen sich einzelne Antriebseinheiten ohne großen Aufwand austauschen. Der Wärmetauscher kann in den Antriebseinheiten oder auch in der Konsole vorgesehen sein.

Weiterhin hat es sich als sehr vorteilhaft erwiesen, wenn eine gemeinsame Energieversorgung für die Zusammenstellung vorgesehen ist.

Durch eine gemeinsame Energieversorgung, die in der Konsole auf die einzelnen Antriebseinheiten verteilt werden kann, wird der Aufbau deutlich vereinfacht.

Ebenfalls erfinsungsgemäß sehr vorteilhaft ist es, wenn das Kühlsystem die erzeugte Wärme nach außen an einen vorgesehenen Punkt abführt.

Damit kann die entstehende Wärme beispielsweise aus dem Produktbereich bzw. Hygienebereich herausgeleitet werden. Es ist auch denkbar, daß die Zusammenstellung die Wärme an ein übergeordnetes Kühlsystem abführt, so daß eine Produktionshalle nicht unnötig erwärmt wird.

Weiterhin hat es sich als sehr vorteilhaft erwiesen, wenn eine gemeinsame Entlüftung der Antriebseinheiten und der Konsole vorgesehen ist.

Auch damit wird das Eindringen von Flüssigkeiten und Fremdkörpern verhindert. Der Druckausgleich der einzelnen Antriebseinheiten erfolgt damit zentral an einem geschützten Punkt. Dasselbe gilt für die Konsole, auf der mehrere Antriebseinheiten befestigt sind.

Eine Trägerplatte ist an der eine Hohlachse befestigt ist. Auf der Hohlachse ist über zwei Kugellager eine Trommel drehbar gelagert. In der Hohlachse ist ein Elektromotor, bestehend aus Stator und Rotor angeordnet. Der Rotor ist dabei über zwei Kugellager im Stator drehbar gelagert.

Der Rotor geht in eine Motorwelle über, auf deren von der Trägerplatte wegweisenden Ende ein Zahnrad drehfest angeordnet ist.

Das Zahnrad wirkt dabei auf ein weiteres, drehbar über ein Lager an der Hohlachse befestigtes Zahnrad. Dieses Zahnrad greift seinerseits in einen Innenzahnkranz der Trommel ein.

Auf diese Weise treibt der Rotor die Trommel an.

Zusätzlich sind in diesem Ausführungsbeispiel noch zwei weitere Zahnräder vorgesehen, die gleichmäßig verteilt im Innenzahnkranz der Trommel angeordnet sind. Diese Zahnräder stützen die Motorwelle und sorgen für eine besonders gleichmäßige Kraftübertragung. Die Zahnräder sind in diesem Ausführungsbeispiel dabei nicht gelagert, sondern sind nur gegen axiale Verschiebungen gesichert. Eine normale Lagerung ist jedoch denkbar und üblich.

Durch die ortsfeste Fixierung des Zahnrades bleibt auch die Position der Zahnräder im Betrieb konstant.

Es ist in diesem Zusammenhang auch denkbar, daß auf die Zahnräder verzichtet wird. Ebenso denkbar ist es, daß neben den Zahnrädern auch das Zahnrad nicht gelagert ist, so daß sich ein Planetengetriebe ergibt.

Andere Getriebeausführungen, wie Zykloidgetrieb und Exzentergetriebe sind ebenso denkbar wie ein- und mehrstufige Getriebeausführungen.

Zusätzlich, aber nicht dargestellt kann in der Hohlachse auch ein Drehwinkelgeber vorgesehen sein, der eine Bestimmung der jeweiligen Trommelposition ermöglicht.

Weiterhin sind in der Hohlachse auch Kühlkörper angeordnet, die Abwärme des Elektromotors aufzunehmen und über Heat-Pipes abzuleiten vermögen. Denkbar ist aber auch, daß die Wärme über die Hohlachse und die Trägerplatte abgeführt wird.

Durch diese Kühlung ist eine hohe Leistungsdichte realisierbar, ohne daß die Antriebseinheit überhitzt. Dennoch sind im Inneren Temperaturen von um die 100 °C denkbar.

Zwischen Hohlachse und Trommel kann eine nicht dargestelle Wärmeisolierung vorgesehen sein, die eine Erwärmung der Trommeloberfläche verringert und so die Wärmeabgabe an ein Transportband minimiert. Auch wird die Erwärmung im Arbeitsbereich der mit der Antriebseinheit angetriebenen Anlage reduziert. Dies bietet gerade bei Lebensmittel verarbeitenden Anlagen den Vorteil, daß die Lebensmittel nicht unnötig erwärmt werden.

Der Elektromotor wird über Zuleitungen mit elektrischer Energie versorgt. Diese Zuleitungen sind durch die Hohlachse und die Trägerplatte nach außen geführt.

Die Trägerplatte ragt über den Durchmesser der Trommel wenigstens in eine Richtung hinaus. Dort ist ein Befestigungsflansch an der Trägerplatte angeformt.

Idealerweise sind die Zuleitungen durch den Befestigungsflansch geführt.

Die Heat-Pipes sind ebenfalls über die Hohlachse, die Trägerplatte und den Befestigungsflansch geführt.

Denkbar ist auch eine nicht dargestellte Leitung zur Schmierstoffversorgung. Diese kann ebenfalls über die Trägerplatte und die Hohlachse geführt sein. Durch diese Schmierstoffleitung kann vor allem den Zahnrädern aber auch Lagern Schmierstoff zugeführt werden.

Neben dem oben genannten Drehwinkelgeber können auch weitere Sensoren und Schutzeinrichtungen vorgesehen sein.

Alles zusammen bildet die Antriebseinheit.

Die Trommel erstreckt sich in ihrer axialen Ausgenung nachezu über die gesamte Breite des Antriebseinheit. Die Trommel schließt dabei direkt an die Trägerplatte an. An dieser Stelle kann eine Dichtung, die beispielsweise als Radialdichtung ausgeführt ist, angeordnet sein. Durch diese Dichtung wird verhindert, daß Schmutz oder dergleichen in die Antriebseinheit eindringt. Gerade bei der Anlagenreinigung ist dies wichtig, da die Reinigung oftmals mit flüssigen Reinigungsmitteln unter hohem Druck erfolgt. Diese werden am Eindringen in den Hohlraum der Trommel gehindert.

Das von der Trägerplatte abgewandte Ende der Trommel ist mit einem Deckel verschlossen.

Bei Temperaturschwankungen besteht die Gefahr, daß sich Über- oder Unterdruck im Inneren der Trommel bildet. Gerade Unterdruck kann dazu führen, daß unerwünscht Dreck und Fremdstoffe durch die Dichtung gesaugt werden. Um dies zu verhindern ist eine Entlüftungsöffnung vorgesehen, die in diesem Ausführungsbeispiel über die Trägerplatte erfolgt. Die Entlüftungsöffnung ist so geschützt angeordnet.

Die Außenseite der Trommel kann je nach Einsatzzweck glatt, verzahnt oder gerillt ausgebildet sein und auch ein Zahnrad oder Kettenrad bilden.

Die gesamte Antriebseinheit ist aufgrund dieses Aufbaus sehr kompakt und extrem leicht zu reinigen. Dennoch wird eine hohe Leistungsdichte erreicht, ohne die Umgegend unnötig zu erwärmen. Dadurch ist die Antriebseinheit besonders für den Einsatz in Hygienebereichen, beispielsweise beim Aufbereiten, Schneiden und Verpacken von Lebensmitteln geeignet. Transportbänder, die bislang nur sehr aufwendig angetrieben werden konnten, können nun direkt angetrieben werden. Zudem ist die Antriebseinheit sehr gut steuerbar.

Das Getriebe der Antriebseinheit kann selbsthemmend ausgebildet sein, wodurch ein Rückdrehen von der Abtriebsseite her ausgeschlossen ist.

Auch denkbar ist es, daß eine nicht dargestellte Motorbremse vorgesehen ist, die ebenso ein Rückdrehen verhindert, aber auch ein ungewolltes losdrehen der Trommel 5 verhindert. Zusätzlich kann eine Drehbewegung bei Bedarf durch Ansprechen der Motorbremse innerhalb kürzester Zeit gestoppt werden, wie dies beispielsweise bei Betätigen eines Not-Aus-Schalters gewünscht ist.

Es ist auch denkbar, daß die Trommel auf ihrer von der Trägerplatte abgewandten Seite mit einem Wellenstummel versehen ist. Der Wellenstummel kann dabei mit einer Verschlußkappe verbunden sein, die über die Trommel greift und mit dieser drehfest verbunden ist. Denkbar ist hier beispielsweise ein Schraub- oder Rastverbindung. Andere Verbindungen sind denkbar.

Ebenso denkbar ist es, daß ein Deckel in die Stirnseite der Trommel eingesetzt und mit dieser verschraubt ist. Dieser Deckel trägt dann wiederum den Wellenstummel.

Der Wellenstummel ist hier mit einer Kerbe und einem Passstück ausgerüstet, um einen universellen Antrieb für eine Vielzahl von Anwendungsmöglichkeiten zu gewährleisten.

Auch denkbar ist es, daß ein oder mehrere Stützlager zur Führung des Wellenstummels vorgesehen sind. Dies ist besonders bei längeren Wellenstummeln vorteilhaft, da dadurch die radiale Belastung auf die Lager der Antriebseinheit reduziert wird. Auch werden die Einsatzmöglichkeiten nochmals universeller.

Meistens sind die Transportbänder in Hygienebereichen aus mehreren Einzelbändern oder Riemen zusammengesetzt.

Um auch hier einen Direktantrieb mit der Antriebseinheit zu ermöglichen, lassen sich mehrere Antriebseinheiten auf einer Konsole anordnen.

Die Konsole kann dabei als U-förmiges Profil ausgebildet sein.

Innerhalb des U-Profils können Steuereinheiten zur elektrischen Steuerung der Antriebseinheiten vorgesehen werden. Diese Steuereinheiten ermöglichen beispielsweise auch die Synchronisation mehrerer Antriebseinheiten auf der Konsole, so daß ein Gleichlauf dieser Antriebseinheiten gewährleistet ist.

Die Steuereinheiten werden zentral mit Energie versorgt.

Zudem ist ein Kühlsystem in der Konsole vorgesehen, welches an die Heat-Pipes der Antriebseinheiten ankoppelt, vorgesehen.

Das Kühlsystem kann dabei selbst aus Heat-Pipes bestehen, die jeweils über Wärmetauscher an die Heat-Pipes ankoppeln. Andere Ausführungen sind denkbar. So kann beispielsweise auch ein aktives Kühlsystem vorgesehen sein. Das Kühlsystem leitet die Abwärme der Antriebseinheiten aus dem Hygienebereich ab und sorgt so dafür, daß die zu verarbeitenden Waren nicht unnötig erwärmt werden. Es ist dabei auch denbkbar, daß die Abwärme auch aus der jeweiligen Produktionshalle abgeleitet wird. Mehrstufige Kühlsysteme sind denkbar.

Auch die Entlüftungsöffnungen können in der Konsole münden. Die Konsole kann selbst eine Entlüftungsöffnung an geeigneter Stelle aufweisen und ansonsten verschlossen sein.

Zudem kann eine nicht dargestellte zentrale Schmierstoffversorgung vorgesehen sein, welche die Antriebseinheiten mit Schmierstoff versorgt.

## Patentansprüche

1. Antriebseinheit (2) in Form einer angetriebenen Trommel, **dadurch gekennzeichnet, daß** innerhalb der Antriebseinheit (2) ein Motor vorgesehen ist und die Außenseite als glatte Trommel, Riemenscheibe, Zahnriemenscheibe, Zahnrad und/oder Kettenrad ausgebildet ist, wobei der Motor als Trommelmotor ausgebildet sein kann.

2. Verwendung einer Antriebseinheit nach Anspruch 1, **dadurch gekennzeichnet, dass** die Antriebseinheit (2) zum Antreiben von Fördereinrichtungen (1, 5) vorgesehen ist, wobei die Antriebseinheit zum Antreiben von Förderbändern und/oder Förderriemen vorgesehen sein kann

3. Verwendung nach Anspruch 2, **dadurch gekennzeichnet, dass** die Antriebseinheit zum getrennten Antreiben von mehreren, nebeneinander angeordneten Fördereinrichtungen vorgesehen ist.

4. Verwendung nach Anspruch 2 oder 3, **dadurch gekennzeichnet, dass** mehrere schwenkbare, getrennt durch Antriebseinheit angetriebene Unterläufer und/oder Oberläufer eines Slicers vorgesehen sind, wobei jeder Unterläufer und/oder Oberläufer mit Mitteln zur Fixierung von zu verarbeitenden Waren, insbesondere Gripper, Dornen und/oder Krallen ausgerüstet sein kann.

5. Verwendung nach einem der Ansprüche 2, 3 oder 4, **dadurch gekennzeichnet, dass** eine Lineareinheit eines Slicers durch mehrbahnige Transport- oder Zahnriemenantriebe ersetzt ist.

6. Verwendung nach einem der Ansprüche 2 bis 5, **dadurch gekennzeichnet, dass** zwischen mehreren Transportbahnen durch die Antriebseinheit angetriebene Transportwalzen und/oder angetriebene Trennstege vorgesehen sind.

7. Verwendung nach einem der Ansprüche 2 bis 6, **dadurch gekennzeichnet, dass** durch individuell angetriebene Transportbänder ein Puffersystem für zu transportierende Waren geschaffen wird, wobei die einzelnen Transportbänder kurz ausgebildet sein können.

8. Verwendung nach einem der Ansprüche 2 bis 7, **dadurch gekennzeichnet, dass** mittels einer oder mehrerer Antriebseinheiten eine Querverschiebung für ein Transportband, insbesondere ein Portionierband realisiert wird und/oder dass mittels der Antriebseinheit eine Wendeeinheit für auf einem Transportband transportierte Waren aufgebaut wird.

9. Verwendung nach einem der Ansprüche 2 bis 8, **dadurch gekennzeichnet, dass** jedes durch eine Antriebseinheit angetriebene Transportband mit einer Laibwaage ausgerüstet ist und/oder dass eine ein- oder mehrbahnig angetriebene Rolle einer Schneidleiste vorgesehen ist.

10. Verwendung nach einem der Ansprüche 2 bis 9, **dadurch gekennzeichnet, dass** eine oder mehrere Absenkeinheiten für jeweils eine Transportbahn vorgesehen ist und/oder dass eine oder mehrere Ausschleuseeinheiten, die insbesondere als Schwingen ausgebildet sind, jeweils von einer Antriebseinheit angetrieben vorgesehen sind.

11. Verwendung nach einem der Ansprüche 2 bis 10, **dadurch gekennzeichnet, dass** ein separat durch eigene Antriebseinheiten angetriebene Speichertransportbänder vorgesehen sind, wobei jedes Speichertransportband zur Lagerung von einer oder mehrerer Produktscheiben vorgsehen sein kann, die dann zur Vervollständigung von Portionen auf ein Portionierband aufgebracht werden.

12. Verwendung nach einem der Ansprüche 2 bis 11, **dadurch gekennzeichnet, dass** individuelle Transportbänder für Interleaver, Underleaver, L-Boards und/oder Trays vorgesehen sind.

13. Verwendung nach einem der Ansprüche 2 bis 12, **dadurch gekennzeichnet, dass** Transportbänder direkt angetrieben sind.

14. Verwendung nach einem der Ansprüche 2 bis 13, **dadurch gekennzeichnet, dass** durch die Kombination mehrerer Antriebseinheiten mehrere Funktionen kombinierbar sind.

15. Verwendung nach einem der Ansprüche 2 bis 14, **dadurch gekennzeichnet, dass** mehrere individuell angetriebene Transportstrecken hinter- und/oder nebeneinander vorgesehen sind.
